# FASCICULE DE BREVET EUROPEEN

(11) **EP 1 407 171 B1**
(45) Date de publication et mention de la délivrance du brevet: **08.09.2010**
(21) Numéro de dépôt: 02767550.3
(22) Date de dépôt: 04.07.2002
(51) Int. Cl.: F16H 59/48

(54) **PROCEDE DE COMMANDE D'UNE TRANSMISSION AUTOMATIQUE EN FONCTION DU PROFIL DE LA ROUTE**
VERFAHREN ZUR STEUERUNG EINES AUTOMATISCHEN GETRIEBES GEMÄSS EINEM STRASSENPROFIL
METHOD FOR CONTROLLING AN AUTOMATIC GEARBOX ACCORDING TO A ROAD PROFILE

(30) Priorité: 06.07.2001 FR 0108986
(43) Date de publication de la demande: 14.04.2004
(73) Titulaire: RENAULT S.A.S., 92100 Boulogne Billancourt (FR); Peugeot Citroën Automobiles SA, 92200 Neuilly sur Seine (FR)
(72) Inventeur: BAIZE, Thierry, F-60300 Senlis (FR); TAFFIN, Christian, F-78320 Le Mesnil Saint Denis (FR)
(74) Mandataire: Kohn, Philippe
(86) Numéro de dépôt international: PCT/FR2002/002353
(87) Numéro de publication internationale: WO 2003/004910

(56) Documents cités:
- EP-A- 0 965 777
- EP-A- 1 109 025
- US-A- 5 885 186

## Description

La présente invention se rapporte à la commande des transmissions automatiques ou automatisées à rapports étagés,

Plus précisément, elle concerne un procédé de commande d'une transmission automatique de véhicule routier par un calculateur exploitant les informations de vitesse de déplacement, d'accélération transversale du véhicule et de charge moteur, pour appliquer à la transmission différentes lois de passages en fonction du profil de la route.

Cette invention s'applique aussi bien à la commande des transmissions du type boîte de vitesses automatique comportant un à plusieurs trains épicycloïdaux associés à plusieurs freins ou embrayages placés sous le contrôle d'un calculateur électronique, qu'à la commande de transmissions du type comportant un ensemble de baladeurs et de synchroniseurs à commande robotisée, ou du type transmission continûment variable.

Elle repose sur l'exploitation du niveau d'accélération latérale du véhicule, mesurée ou estimée dans les virages, pour déterminer un critère permettant d'évaluer le type de profil de route (sinueux ou pas) et ce pour imposer par exemple au calculateur d'une transmission automatique différentes lois de passage des vitesses (ou « variogrammes » dans le cas d'une transmission à variation continue) qui sont alors adaptées au profil sinueux de ladite route.

L'état de la technique le plus proche est illustré par le document US 5 885 186.

On connaît plusieurs solutions pour imposer différentes lois de passage, en fonction par exemple du style de conduite du conducteur, du profil de la route (montée et descente). Ces solutions ne permettent pas d'adapter convenablement les transmissions automatiques lorsque la route devient sinueuse. En effet, sur de tels parcours, il serait souhaitable d'adopter un jeu de lois de passage permettant de conserver une réserve de couple à la roue (en augmentant par exemple le régime de rotation du moteur), pour aider aux relances après chaque virage. et éviter ainsi des phénomènes de pompages de rapport (ou de variations de rapport dans le cas des transmissions à variation continue) et qui nuisent à l'agrément de conduite du véhicule sur les routes sinueuses.

L'invention vise à remédier aux inconvénients des systèmes de prise en compte du profil de la route connus.

Dans ce but, elle propose un procédé de commande d'une transmission automatique de véhicule routier qui consiste :
- à calculer un coefficient de sinuosité sur la base d'une mesure de l'accélération latérale du véhicule et de sa dérivée par rapport au temps,
- à sélectionner un jeu de loi de passage des rapports selon ladite valeur calculée ;
à appliquer le dite jeu loi de passage de rapports sélectionnée au moyen d'un calculateur de transmission à ladite transmission automatique si le coefficient de sinuosité dépasse un seuil prédéterminé.

Si la transmission est à rapports étagés, le calculateur applique différentes lois de changements de rapports discrets.

Si en revanche c'est une transmission à variation continue ou infiniment variable, il applique différents « variogrammes » de changement de rapport continu.

De préférence, le coefficient d'activité Kvirage est obtenu à partir du produit de l'accélération transversale (Gt) et de sa dérivée par rapport au temps (dGt/dt).

L'accélération latérale du véhicule peut être déterminée soit à partir d'un capteur d'accélération, ou selon une méthode de reconstitution à partir d'une information représentative de l'angle de rotation du volant ou encore à partir des informations représentatives de la vitesse des roues comme décrite dans la demande de brevet français n° 99-15865, publiée sous numéro FR 2802646.

D'autres caractéristiques et avantages de l'invention apparaîtront clairement à la lecture de la description suivante d'un mode de réalisation particulier de celle-ci en se rapportant aux dessins annexés, sur lesquels :
- la figure 1 représente schématiquement le procédé selon l'invention,
- la figure 2 regroupe dans un schéma fonctionnel, les principales étapes de la stratégie proposée de détermination du facteur de sinuosité de la route Kvirage
- la figure 3 regroupe dans un schéma fonctionnel, la stratégie proposée de détermination du rapport de la transmission, adapté à la sinuosité de la route.

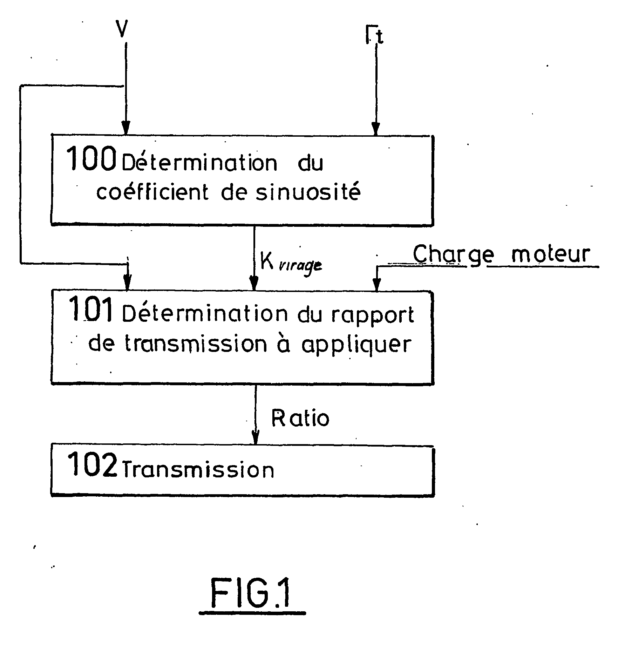

Les différentes informations vitesse véhicule (V) et accélération transversale (Gt) mentionnées sur la figure 1 sont exploitées conformément à l'invention par une unité spécifique 100 qui détermine un coefficient de sinuosité Kvirage. Ce dernier alimente ensuite le bloc 101 qui reçoit également d'autres informations représentative de la vitesse d'avancement du véhicule V et de la charge du moteur 'Charge_moteur' qui peut-être à titre indicatif et non limitatif soit l'angle d'ouverture du papillon ou la pédale d'accélérateur, ou encore une puissance ou un couple délivré par ledit moteur. Ce bloc 101 détermine le rapport de transmission 'ratio' à appliquer à la transmission représentée par le bloc 102 ; cette détermination s'effectue selon le procédé décrit dans l'invention, par une sélection d'un jeu de lois de passage (dans le cas des transmissions à rapports étagés) ou d'un « variogramme » (dans le cas des transmissions à rapports continus), qui est fonction de Kvirage.

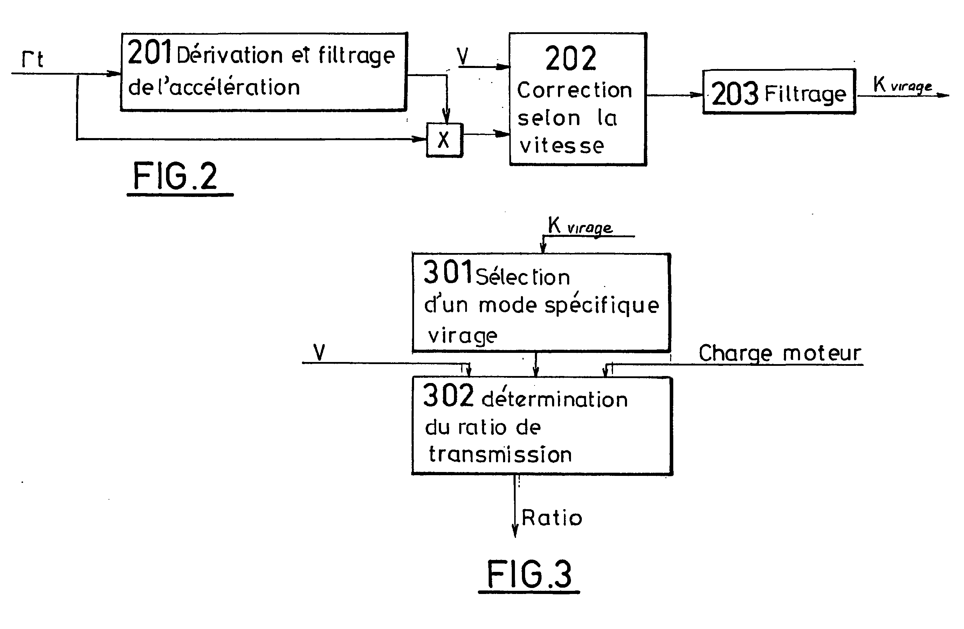

A partir de l'accélération transversale 'Gt', le bloc 201 détermine la dérivée filtrée 'dGt/dt' de l'accélération transversale (cf. figure 2), puis le produit entre 'Gt' et 'dGt/dt'. Ce produit est corrigé selon la vitesse d'avancement du véhicule dans le bloc 202. Le résultat de cette opération est ensuite filtré dans le bloc 203 qui détermine finalement le coefficient Kvirage. Cette détermination de Kvirage permet, lors des mises en virage, de pondérer la dynamique de mise en virage du véhicule par le niveau d'accélération transversale qui est atteint et aussi selon la vitesse du véhicule ; ainsi, un conducteur qui conduit relativement sportivement sur route sinueuse aura un coefficient Kvirage elévé, et qui est pondéré selon la vitesse du véhicule pour éviter les détections trop fréquentes en roulage de type ville ou sur autoroute à vitesse soutenue.

Le bloc 301 (cf. figure 3) détermine à partir du coefficient de sinuosité Kvirage un jeu de lois de changements de vitesses (ou « variogramme » dans le cas d'une transmission à rapport continus). Lorsque Kvirage est supérieur à un seuil déterminé, on adopte un jeu de lois de changements de vitesses adapté au fait que la route est considérée sinueuse. Ce jeu de lois de passage permet d'augmenter la réserve de puissance motrice (en favorisant notamment les rapports inférieurs), et ce pour aider à la relance du véhicule en sortie de virage. Lorsque Kvirage est inférieur au seuil déterminé, on adopte un jeu de lois de changements de vitesses adapté aux conditions de roulage 'normales', c'est-à-dire adapté à une route comportant peu de virages.

Le bloc 302 détermine de façon classique le rapport de transmission à appliquer à la transmission, à partir des informations représentative de la vitesse d'avancement du véhicule (V) et de la charge du moteur qui peut-être à titre indicatif et non limitatif soit l'angle d'ouverture du papillon ou la pédale d'accélérateur, ou encore une puissance ou un couple délivré par ledit moteur.

## Revendications

1. Procédé de commande d'une transmission automatique de véhicule routier par calculateur exploitant les informations de vitesse de déplacement et d'accélération transversale du véhicule et de charge moteur, pour appliquer à la transmission différentes lors de passage en fonction du profil de la route, **caractérisé en ce qu'**il consiste :
- à calculer un coefficient de sinuosité (Kvirage) sur la base d'une mesure de l'accélération latérale (Gt) du véhicule et de sa dérivée par rapport au temps (dGt/dt),
- à sélectionner un jeu de loi de passage des rapports selon ladite valeur calculée (Kvirage);
à appliquer le dite jeu de loi de passage de rapports sélectionnée au moyen du calculateur de transmission à ladite transmission automatique si le coefficient de sinuosité (Kvirage) dépasse un seuil prédéterminé.

2. Procédé de commande selon la revendication 1, **caractérisé en ce que** le calculateur applique différentes lois de changements de rapports discrets.

3. Procédé de commande selon la revendication 1, **caractérisé en ce que** le calculateur applique différents variogrammes de changement de rapport continu.

4. Procédé de commande selon la revendication 1, 2 ou 3, **caractérisé en ce que** le coefficient d'activité Kvirage est obtenu à partir du produit de l'accélération transversale (Gt) et de sa dérivée par rapport au temps (dGt/dt).

5. Procédé de commande selon la revendication 4, **caractérisé en ce que** le produit de l'accélération transversale (Gt) et de sa dérivée par rapport au temps (dGt/dt) est pondéré par la vitesse de déplacement du véhicule.

6. Procédé de commande selon l'une des revendications précédentes, **caractérisé en ce que** la seconde étape de sélection du jeu de loi de passage des rapports selon la valeur calculée du coefficient de sinusoïté dépend aussi d'une information de charge du moteur.

7. Procédé de commande selon la revendication 6, **caractérisé en ce que** l'information de charge moteur est donnée par l'ouverture du papillon moteur.

8. Procédé de commande selon la revendication 6, **caractérisé en ce que** l'information de charge moteur est donnée par la position de la pédale d'accélérateur.

9. Procédé de commande selon la revendication 6, **caractérisée en ce que** l'information de charge moteur est donnée par une mesure de la puissance fournie par le moteur.

10. Procédé de commande la revendication 6, **caractérisé en ce que** l'information de charge moteur est donnée par une mesure du couple délivré par le moteur.

## Claims

1. A method of controlling a road vehicle automatic transmission by computer utilizing the information regarding speed of travel and transverse acceleration of the vehicle and engine load, so as to apply various road profile dependent shift laws to the transmission, **characterized in that** it consists of :
- calculating a bendiness coefficient (Kvirage) on the basis of a vehicle lateral acceleration measure (Gt) and of its derivative with respect to time (dGt/dt),
- selecting a set of shift laws for the ratios according to said calculated value (Kvirage),
- apply said set of shift laws, selected by means of the transmission computer, to the automatic transmission if the bendiness coefficient (Kvirage) is greater than a specified threshold.

2. The method of control as claimed in claim 1, **characterized in that** the computer applies various discrete change of ratio laws.

3. The method of control as claimed in claim 1, **characterized in that** the computer applies various continuous change of ratio variograms.

4. The method of control as claimed in claim 1, 2 or 3, **characterized in that** the activity coefficient Kcorner is obtained from the product of the transverse acceleration (Gt) and its derivative with respect to time (dGt/dt).

5. The method of control as claimed in claim 4, **characterized in that** the product of the transverse acceleration (Gt) and its derivative with respect to time (dGt/dt) is weighted by the speed of travel of the vehicle.

6. The method of control as claimed in one of the preceding claims, **characterized in that** the second step of selecting the set of shift laws for the ratios according to the calculated value of the bendiness coefficient also depends on an information regarding engine load.

7. The method of control as claimed in claim 6, **characterized in that** the information regarding engine load is given by the opening of the engine throttle valve.

8. The method of control as claimed in claim 6, **characterized in that** the information regarding engine load is given by the position of the accelerator pedal.

9. The method of control as claimed in claim 6, **characterized in that** the information regarding engine load is given by a measurement of the power provided by the engine.

10. The method of control as claimed in claim 6, **characterized in that** the information regarding engine load is given by a measurement of the torque delivered by the engine.

## Patentansprüche

1. Verfahren zur Steuerung eines automatischen Getriebes eines Straßenfahrzeuges durch einen Rechner, der die Informationen bzw. Daten der Fahrgeschwindigkeit und der transversalen Beschleunigung des Fahrzeuges und der Motorlast auswertet, um in Abhängigkeit von dem Straßenprofil verschiedene Schaltmuster bei dem Getriebe zu verwenden, **dadurch gekennzeichnet, dass** das Verfahren aus folgendem besteht:
- Berechnen eines Sinuositäts-Koeffizienten (Kvirage) auf der Grundlage einer Messung der lateralen Beschleunigung (Gt) des Fahrzeuges und deren Ableitung gegenüber der Zeit (dGt/dt),
- Auswählen eines Satzes von Schaltmustern der Gänge nach dem berechneten Wert (Kvirage);
- Anwenden des Satzes von ausgewählten Schaltmustern der Gänge mittels des Rechners für das Getriebe auf das automatische Getriebe, wenn der Sinuositäts-Koeffizient (Kvirage) einen vorher festgelegten Schwellenwert überschreitet.

2. Verfahren zur Steuerung nach Anspruch 1, **dadurch gekennzeichnet, dass** der Rechner verschiedene Muster für das diskrete Wechseln der Gänge verwendet.

3. Verfahren zur Steuerung nach Anspruch 1, **dadurch gekennzeichnet, dass** der Rechner verschiedene Variogramme für den kontinuierlichen Wechsel der Gänge anwendet.

4. Verfahren zur Steuerung nach den Ansprüchen 1, 2 oder 3. **dadurch gekennzeichnet, dass** man den Aktivitäts-Koeffizienten Kvirage aus dem Produkt der transversalen Beschleunigung (Gt) und ihrer Ableitung gegenüber der Zeit (dGt/dt) erhält.

5. Verfahren zur Steuerung nach Anspruch 4, **dadurch gekennzeichnet, dass** das Produkt aus der transversalen Beschleunigung (Gt) und ihrer Ableitung gegenüber der Zeit (dGt/dt) durch die Fahrgeschwindigkeit des Fahrzeugs gewichtet bzw. bewertet wird.

6. Verfahren zur Steuerung nach einem der vorhergehenden Ansprüche, **dadurch gekennzeichnet, dass** die zweite Stufe der Auswahl des Satzes von Schaltmustern der Gänge nach dem berechneten Wert des Sinuositäts-Koeffizienten auch von Daten über die Motorlast abhängt.

7. Verfahren zur Steuerung nach Anspruch 6, **dadurch gekennzeichnet, dass** man die Daten über die Motorlast durch Öffnung der Motordrosselklappe erhält.

8. Verfahren zur Steuerung nach Anspruch 6, **dadurch gekennzeichnet, dass** man die Daten über die Motorlast über die Position des Gaspedals erhält.

9. Verfahren zur Steuerung nach Anspruch 6, **dadurch gekennzeichnet, dass** man die Daten über die Motorlast durch eine Messung der von dem Motor gelieferten Leistung erhält.

10. Verfahren zur Steuerung nach Anspruch 6, **dadurch gekennzeichnet, dass** man die Daten über die Motorlast durch eine Messung des Drehmomentes des Motors erhält.
